(19) Europäisches Patentamt
European Patent Office
Office européen des brevets

(11) EP 3 569 632 B1

(12) **EUROPÄISCHE PATENTSCHRIFT**

(45) Veröffentlichungstag und Bekanntmachung des Hinweises auf die Patenterteilung:
**06.12.2023 Patentblatt 2023/49**

(21) Anmeldenummer: **19174723.7**

(22) Anmeldetag: **15.05.2019**

(51) Internationale Patentklassifikation (IPC):
***C08G 59/50*** *(2006.01)*

(52) Gemeinsame Patentklassifikation (CPC):
**C08G 59/5026; C08G 59/5046; C08G 59/506**

(54) **SCHNELL HÄRTENDE EPOXYSYSTEME**

FAST CURING EPOXY SYSTEMS

SYSTÈMES ÉPOXYDIQUES À DURCISSEMENT RAPIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.05.2018 EP 18172951**

(43) Veröffentlichungstag der Anmeldung:
**20.11.2019 Patentblatt 2019/47**

(73) Patentinhaber: **Evonik Operations GmbH**
**45128 Essen (DE)**

(72) Erfinder:
- **Spyrou, Emmanouil**
  **46514 Schermbeck (DE)**
- **Diesveld, Andrea**
  **48712 Gescher (DE)**
- **Kreischer, Susanne**
  **45701 Herten (DE)**
- **Loesch, Holger**
  **44627 Herne (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A1- 2 957 584** **EP-A1- 3 255 078**
**EP-A2- 0 604 363** **US-A- 4 775 734**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 569 632 B1

## Beschreibung

Gegenstand der vorliegenden Erfindung sind Zusammensetzungen umfassend mindestens ein Epoxyharz, mindestens ein cyclisches Amin und ein Salz einer sehr starken Brönstedt-Säure.

Epoxidharze, insbesondere solche, die aus Bisphenol A und Epichlorhydrin hergestellt werden, sind bekannte Rohstoffe für die Herstellung von qualitativ hochwertigen Gießharzen, Beschichtungsmassen, Kompositen und Klebstoffen. Mit Polyaminen gehärtete aromatische Epoxidharze besitzen neben guter Chemikalien- und Lösungsmittelbeständigkeit eine gute Haftfestigkeit auf vielen Untergründen.

Zur Beschleunigung der Härtung von Epoxy-Amin-Beschichtungssystemen können Katalysatoren eingesetzt werden (US 3,492,269 A, US 5,470,896 A, GB 1,105,772 A).

EP 0 083 813 A1, EP 2 957 584 A1, US 5,441,000 A, US 5,629,380 A, WO 96/09352 A1 offenbaren die katalysierte Härtung von Epoxyharzen mit verschiedenen Aminen.

Cyclische Amine zeigen Vorteile bei der Epoxyhärtung. US 8,951,619 B2 und US 9,006,385 B2 offenbaren u.a. die katalysatorfreie Härtung von Epoxyharzen mit N-substuierten Piperazinen.

CN 106905816 A, CN 106833261 A, JP H08-113876 A, DE 1 954 701 A1, CA 2 165 585 A1 und US 3,055,901 A offenbaren die katalysatorfreie Härtung von Epoxyharzen mit Aminoethylpiperazin.

US 8,980,979 B2 offenbart die Härtung eines Epoxyharzes mit u.a. einem cyclischen Diamin ausgewählt aus Piperazin oder Homopiperazin ggf. in Gegenwart eines Katalysators.

EP 0 969 030 A1 offenbart Epoxy/Amin-Beschichtungssysteme, deren Aminkomponente ein aliphatisches Amin ist. Die Zusammensetzungen können einen Katalysator aufweisen. In den Beispielen wird als Härter Aminoethylpiperazin eingesetzt.

US 4,775,734 A offenbart die Härtung von Epoxyharzen mit Aminoethylpiperazin unter Verwendung katalytischer Mengen von Tetrafluoroborat- oder Hexafluorophosphat-Salzen verschiedener Amine. In Vergleichsbeispielen (Beispiel 2) wird weiterhin der Versuch der Härtung von Epoxyharzen mit Aminoethylpiperazin in Gegenwart von Lithiumtetrafluoroborat offenbart. Bei dem eingesetzten Verhältnis von Epoxygruppen : NH-Gruppen erfolgt jedoch keine Umsetzung. Weiterhin wird in einem Vergleichsbeispiel (bei Beispiel 9) Epoxyharz mit Aminoethylpiperazin in Gegenwart von Imidazolin gehärtet. Das eingesetzte Imidazolin hat jedoch den Nachteil, dass es in Gegenwart feuchter Materialien nicht lagerstabil ist und zur Vergilbung neigt.

EP 3 255 078 A1 offenbart Epoxidharzzusammensetzungen umfassend mindestens eine Epoxidverbindung, 2-(2,2,6,6-tetramethylpiperidin-4-yl)propan-1 ,3-diamin, und optional einen Katalysator, bei dem es sich unter anderem um ein anorganisches Salz handeln kann.

WO 2017/074810 A1 offenbart Zusammensetzungen umfassend ein Epoxyharz, ein Polyetheramin und einen weiteren Aminhärter, bei dem es sich unter anderem um ein Imidazol oder Imidazolin handeln kann, sowie einen Metalltriflat-Katalysator.

Den Zusammensetzungen des Standes der Technik ist gemein, dass sie zu langsam oder nur bei hohen Temperaturen aushärten.

Für viele Anwendungen ist es jedoch wichtig, dass eine Oberflächenhärtung oder die vollständige Durchhärtung besonders schnell oder aber bei niedrigen Temperaturen abläuft. Ersteres kann die Produktivität erhöhen oder aber den nächsten Verarbeitungsschritt beschleunigen. Letzteres ist vor allem in kalten Gegenden wichtig, um beispielsweise Schiffe oder Pipelines mit einem Korrosionsschutzüberzug zu versehen, so dass dort auch im Winter weitergearbeitet werden kann.

Es stellt sich vorliegend somit die Aufgabe Epoxysysteme bereitzustellen, die unter gleichen Bedingungen deutlich schneller reagieren als die bisher bekannten Formulierungen. Auch stellt sich die Aufgabe, Epoxyformulierungen bereitzustellen, die bei Temperaturen deutlich unterhalb von Raumtemperatur schneller als bislang möglich an- bzw. aushärten.

Diese sich vorliegend stellenden Aufgaben werden gelöst durch die erfindungsgemäßen Zusammensetzungen umfassend

a) mindestens ein Epoxyharz,
b) mindestens ein cyclisches Amin der Formel (I)

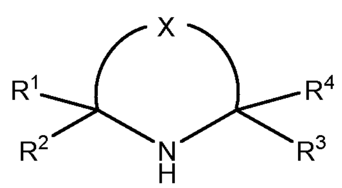

(I)

in der

- $R^1$ bis $R^4$ für H oder organischen Rest steht und
-

$$X = -(Y^1)_m-(A^1)_n-(Y^2)_o-(A^2)_p-(Y^3)_q-(A^3)_r(Y^4)_s- , \qquad (II)$$

wobei unabhängig von einander

o m, n, o, p, q, r und s = 0 oder 1,
o $A^1$, $A^2$, $A^3$ = Alkylen- oder Alkenylenrest und
o $Y^1$, $Y^2$, $Y^3$, $Y^4$ = $NR^5$, $PR^5$, O oder S, mit $R^5$ unabhängig voneinander = organischer Rest,
◦ wobei jeweils zwei organische Reste ausgewählt aus $R^1$ bis $R^5$ und ggf. anwesenden Resten der Alkylen- und/oder Alkenylenreste $A^1$, $A^2$, $A^3$ auch einen oder mehrere weitere Ringe bilden können,

- mit der Maßgabe, dass mindestens einer der vorhandenen Reste ausgewählt aus $R^1$ bis $R^5$ und ggf. anwesenden Resten der Alkylen- und/oder Alkenylenreste $A^1$, $A^2$, $A^3$ mit mindestens einer Gruppe $-NHR^6$ oder-$NH_2$ substituiert ist, wobei $R^6$ = organischer Rest, und

c) mindestens ein Salz einer Brönstedt-Säure mit einem pKs-Wert kleiner oder gleich -9,01 mit einem Gegenion ausgewählt aus Metallionen, Metall-haltigen Ionen, Phosphoniumionen und unsubstituierten Ammoniumionen.

Bevorzugt beträgt das Verhältnis der Epoxy-Gruppen des Epoxyharzes zu der Summe aller NH-Gruppen aller Amine 0,5 : 1 bis 1,5 : 1, bevorzugt 0,8 : 1 bis 1,2 : 1, ganz besonders bevorzugt 0,9 : 1 bis 1,1 zu 1. Unter "allen Aminen" sind dabei cyclische Amine der Formel (I) sowie nachfolgend beschriebene nicht unter Formel (I) fallenden Amine d) zu verstehen. Eine entsprechende Umsetzung hat den Vorteil, dass dadurch die Vernetzungsdichte und die Molmasse steigen, und damit die mechanischen Eigenschaften, die Chemikalienbeständigkeit und die Kratzfestigkeit verbessert werden. Außerdem bleiben keine unreagierten Bestandteile in der Beschichtung übrig, die entweder unerwünschte Nebenreaktionen eingehen können, aus der Beschichtung heraus migrieren oder aber zumindest als Weichmacher die Wärmeformbeständigkeit herabsetzen.

Bei der **Komponente a)** handelt es sich um mindestens ein Epoxyharz. Prinzipiell sind dafür alle Epoxidverbindungen geeignet.

Geeignete Epoxidverbindungen werden z. B. in EP 675 185 A2 beschrieben. Es kommt eine Vielzahl der bekannten Verbindungen in Betracht, die mehr als eine Epoxidgruppe, vorzugsweise zwei Epoxidgruppen, pro Molekül enthalten. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten oder Ethergruppierungen.

Bevorzugte Epoxidverbindungen sind dabei Glycidylether, die sich von mehrwertigen Phenolen, insbesondere Bisphenolen sowie Novolaken ableiten und deren Molmassen bezogen auf die Anzahl der Epoxidgruppen ME ("Epoxidäquivalentgewichte", "EV-Wert") zwischen 100 und 1500 g/val, insbesondere jedoch zwischen 150 und 250 g/val, liegen.

Besonders bevorzugte Epoxidverbindungen leiten sich ab von Resorcin, Hydrochinon, 2,2-Bis-(4-hydroxyphenyl)-propan (Bisphenol A), Isomerengemischen des Dihydroxydiphenylmethans (Bisphenol F), 4,4'-Dihydroxydiphenylcyclohexan, 4,4'-Dihydroxy-3,3'-dimethyldiphenylpropan,4,4'-Dihydroxydiphenyl, 4,4'-Dihydroxybenzophenon, Bis-(4-hydroxyphenyl)-1,1-ethan, Bis-(4-hydroxyphenyl)-1,1-isobutan, 2,2-Bis-(4-hydroxy-tert.butylphenyl)-propan, Bis-(2-hydroxynaphthyl)-methan, 1,5-Dihydroxynaphthalin, Tris-(4-hydroxyphenyl)-methan, Bis-(4-hydroxyphenyl)-ether, Bis-(4-hydroxyphenyl)-sulfon, sowie den Chlorierungs- und Bromierungsprodukten der vorstehend genannten Verbindungen (wie beispielsweise TetrabromBisphenol A).

Ganz besonders bevorzugt werden flüssige Diglycidylether auf Basis von Bisphenol A und Bisphenol F mit einem Epoxidäquivalentgewicht von 150 bis 200 g/val eingesetzt.

Bevorzugt können auch Polyglycidylether von Polyalkoholen verwendet werden, wie z. B. Ethandiol-1,2-diglycidylether, Propandiol-1,2-diglycidylether, Propandiol-1,3-diglycidylether, Butandioldiglycidylether, Pentandioldiglycidylether (auch Neopentylglykoldiglycidylether), Hexandioldiglycidylether, Diethylenglykoldiglycidylether, Dipropylenglykoldiglycidylether, höhere Polyoxyalkylenglykoldiglycidylether, wie z. B. höhere Polyoxyethylenglykoldiglycidylether und glykoldiglycidylether, Mischpolyoxyethylen-propylenglykoldiglycidylether, Polyoxytetramethylenglykoldiglycidylether, Polyglycidylether des Glycerins, des 1,2,6-Hexantriols, Trimethylolpropans, Trimethylolethans, Pentaerythrits, Sorbitols, Polyglycidylether von oxalkylierten Polyolen (wie z. B. des Glycerins, Trimethylolpropans, Pentaerythrits u. a.), Diglydicylether des Cyclohexandimethanols, Bis-(4-hydroxycyclohexyl)methans und 2,2-Bis-(4-hydroxy-cyclohexyl)propans,

Polyglycidylether des Rizinusöls, Triglycidyltris-(2-hydroxy-äthyl)-isocyanurat. Weiterhin kommen bevorzugt als Komponente A) in Frage: Poly-(N-glycidyl) Verbindungen, die erhältlich sind durch Dehydrohalogenierung der Reaktionsprodukte von Epichlorhydrin und Aminen wie Anilin, n-Butylamin, Bis-(4-aminophenyl)methan, m-Xylylendiamin oder Bis-(4-methylaminophenyl)methan. Zu den Poly-(N-glycidyl)-Verbindungen zählen aber auch Triglycidylisocyanurat, Triglycidylurazol sowie deren Oligomere, N,N'-Diglycidylderivate von Cycloalkylenharnstoffen und Diglycidylderivate von Hydantoinen.

Weiterhin können bevorzugt auch Polyglycidylester von Polycarbonsäuren eingesetzt werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Tetrahydrophthalsäure, Hexahydrophthalsäure, 2,6-Naphthalindicarbonsäure und höhere Dicarbonsäurediglycidylester, wie z. B. dimerisierte bzw. trimerisierte Linolensäure, erhält. Beispiele sind Adipinsäurediglycidylester, Phthalsäurediglycidylester und Hexahydrophthalsäurediglycidylester.

Weiterhin seien bevorzugt genannt Glycidylester ungesättigter Carbonsäuren und epoxidierte Ester von ungesättigten Alkoholen bzw. ungesättigten Carbonsäuren. Zusätzlich zu den Polyglycidylethern können geringe Mengen von Monoepoxiden wie z. B. Methylglycidylether, Butylglycidylether, Allylglycidylether, Äthylhexylglycidylether, langkettige aliphatische Glycidylether, wie z. B. Cetylglycidylether und Stearylglycidylether, Monoglycidylether eines höheren isomeren Alkoholgemisches, Glycidylether einer Mischung von C12 bis C13 Alkoholen, Phenylglycidylether, Kresylglycidylether, p-t-Butylphenylglycidylethers, p-Octylphenylglycidylether, p-Phenylphenylglycidylether, Glycidylether eines oxalkylierten Laurylalkohols sowie Monoepoxide wie beispielsweise epoxidierte einfach ungesättigte Kohlenwasserstoffe (Butylen-, Cyclohexen-, Styroloxid) in Massenanteilen bis zu 30 Gew.-%, vorzugsweise 10 bis 20 Gew.-%, bezogen auf die Masse der Polyglycidylether mitverwendet werden.

Eine ausführliche Aufzählung der geeigneten Epoxyverbindungen findet sich in dem Handbuch "Epoxidverbindungen und Epoxidharze" von A. M. Paquin, Springer Verlag, Berlin 1958, Kapitel IV, und in Lee Neville "Handbook of Epoxy Resins", 1967, Chapter 2.

Als Epoxyverbindungen kommen dabei bevorzugt Glycidylether und Glycidylester, aliphatische Epoxide, Diglycidylether auf Basis Bisphenol A und / oder Bisphenol F und Glycidylmethacrylate in Frage. Beispiele für solche Epoxide sind auch Triglycidylisocyanurat (TGIC, Handelsname ARALDIT 810, Huntsman), Gemische aus Terephthalsäurediglycidylester und Trimelitsäuretriglycidylester (Handelsname ARALDIT PT 910 und 912, Huntsman), Glycidylester der Versaticsäure (Handelsname CARDURA E10, Shell), 3,4-Epoxycyclohexylmethyl-3',4'-epoxycyclohexancarboxylat (ECC), Ethylhexylglycidylether, Butylglycidylether, Pentaerythrittetraglycidylether, (Handelsname POLYPOX R 16, UPPC AG) sowie andere Polypoxtypen mit freien Epoxygruppen.
Es können auch Mischungen der genannten Epoxyverbindungen eingesetzt werden.

Besonders bevorzugte Epoxyharze sind Polyepoxide auf Basis von Bisphenol A-diglycidylether, Bisphenol F-diglycidylether, 4,4'-Methylen-bis[N,N-bis(2,3-epoxypropyl)anilin], Hexandioldiglycidylether, Butandioldiglycidylether, Trimethylolpropantriglycidylether, 1,2,3-Propantrioltriglycidylether, Pentaerythrit-tetraglycidylether und Hexahydrophthalsäurediglycidylester.

Bevorzugt werden Mischungen der vorgenannten Epoxyverbindungen als Komponente A) eingesetzt.

Als **cyclische Amine b)** kommen prinzipiell alle Verbindungen in Frage, die als NH-Träger genau eine cyclische, d.h. ringständige, NH-Gruppe sowie mindestens eine nicht-ringständige primäre oder sekundäre Aminogruppe aufweisen. Darüber hinaus können die erfindungsgemäß eingesetzten Amine jedoch natürlich noch tertiäre Aminogruppen aufweisen, die nicht reaktiv sind.

Die Amine b) weisen die Formel (I) auf

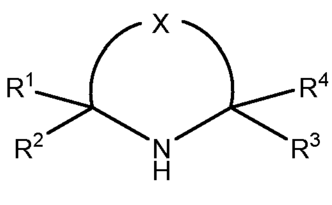

, (I)

in der

- $R^1$ bis $R^4$ für H oder organischen Rest steht und
-

$$X = -(Y^1)_m-(A^1)_n-(Y^2)_o-(A^2)_p-(Y^3)_q-(A^3)_r(Y^4)_s- , \qquad (II)$$

wobei unabhängig von einander

- m, n, o, p, q, r und s = 0 oder 1,
- $A^1$, $A^2$, $A^3$ = Alkylen- oder Alkenylenrest und
- $Y^1$, $Y^2$, $Y^3$, $Y^4$ = $NR^5$, $PR^5$, O oder S, wobei $R^5$ = organischer Rest,
- wobei jeweils zwei organische Reste ausgewählt aus $R^1$ bis $R^5$ und ggf. anwesenden Resten der Alkylen- und/oder Alkenylenreste $A^1$, $A^2$, $A^3$ auch einen oder mehrere weitere Ringe bilden können,

mit der Maßgabe, dass mindestens einer der vorhandenen Reste ausgewählt aus $R^1$ bis $R^5$ und ggf. anwesenden Resten der Alkylen- und/oder Alkenylenreste $A^1$, $A^2$, $A^3$ mit mindestens einer Gruppe $-NHR^6$ oder-$NH_2$ substituiert ist, wobei $R^6$ = organischer Rest.

Die cyclischen Amine sind in Bezug auf den dargestellten Ring in Formel (I) gesättigt oder zum Teil ungesättigt. Entsprechende Amine reagieren schneller als entsprechende aromatische Amine und Imidazoline. Optional weitere anwesende Ringe im cyclischen Amin können nicht nur gesättigt oder ungesättigt, sondern auch aromatisch sein.

Bevorzugte cyclische Amine sind in Bezug auf den dargestellten Ring in Formel (I) gesättigt.

Bevorzugt ist mindestens einer der Reste $R^1$, $R^2$, $R^3$ und $R^4$ = H. Die der ringständigen Aminogruppe benachbarten Kohlenstoffatome sind dann, da mindestens einer der Reste $R^1$, $R^2$, $R^3$ und $R^4$ = H ist, in Summe an mindestens einer Stelle unsubstituiert. Entsprechende Amine reagieren schneller als Amine, bei denen alle vier Reste $R^1$, $R^2$, $R^3$ und $R^4 \neq H$ sind. Weiter bevorzugt sind mindestens zwei, noch weiter bevorzugt mindestens drei, ganz besonders bevorzugt alle der Reste $R^1$, $R^2$, $R^3$ und $R^4$ = H.

Im Rest X sind, wenn vorhanden, $A^1$, $A^2$ und $A^3$ unabhängig voneinander Alkylen- oder Alkenylenreste. Diese können wiederum organische Reste tragen. Weisen die Alkylen- und/oder Alkenylenreste selbst einen oder mehrere organische Reste auf, können jeweils zwei organische Reste ausgewählt aus den organischen Resten der Alkylen- und/oder Alkenylenreste auch miteinander oder mit ggf. vorhandenen organischen Resten $R^1$ bis $R^5$ einen oder mehrere weitere Ringe bilden.

Bevorzugt weisen $A^1$, $A^2$ und $A^3$, jeweils, wenn vorhanden, unabhängig voneinander die Formel (III) auf,

$$-(CR^7R^8)_x-(CR^9=CR^{10})_y-(CR^{11}R^{12})_z- \qquad (III)$$

in der unabhängig von einander

- $R^7$, $R^8$, $R^9$, $R^{10}$, $R^{11}$ und $R^{12}$ = H oder organischer Rest und
- $$1 \leq x + y + z \leq 7$$

ist.

Die Indices x, y und z können entsprechend Ihrer Zugehörigkeit zum Rest $A^1$, $A^2$ und $A^3$ bevorzugt auch als Indices $x^1$, $y^1$ und $z^1$, als $x^2$, $y^2$ und $z^2$ und als $x^3$, $y^3$ und $z^3$ bezeichnet werden.

Bevorzugt weist X eine Kettenlänge von 2 bis 15 Atomen auf. Bevorzugt beträgt somit die Summe aus allen x, ½·y und z sowie aus m, o, q und s einen Wert zwischen 2 und 15, weiter bevorzugt einen Wert zwischen 2 und 8, noch weiter bevorzugt einen Wert zwischen 2 und 5 und ganz besonders bevorzugt einen Wert zwischen 2 und 4. Anders ausgedrückt, ist bevorzugt $2 \leq m + o + q + s + x^1 + ½·y^1 + z^1 + x^2 + ½·y^2 + z^2 + x^3 + ½·y^3 + z^3 \leq 15$. Weiter bevorzugt ist $2 \leq m + o + q + s + x^1 + ½·y^1 + z^1 + x^2 + ½·y^2 + z^2 + x^3 + ½·y^3 + z^3 \leq 8$, weiter bevorzugt $2 \leq m + o + q + s + x^1 + ½·y^1 + z^1 + x^2 + ½·y^2 + z^2 + x^3 + ½·y^3 + z^3 \leq 5$, ganz besonders bevorzugt $2 \leq m + o + q + s + x^1 + ½·y^1 + z^1 + x^2 + ½·y^2 + z^2 + x^3 + ½·y^3 + z^3 \leq 4$.

Bei den Aminen der Formel (I) handelt es sich um (ggf. bi-/poly)cyclische Verbindungen, da beide zur Aminogruppe benachbarten Kohlenstoffatome beidseitig an den substituierten (Hetero)Alkylenrest der Formel (II) angebunden sind.

Weiter bevorzugt weist Formel (I) neben dem Stickstoffatom der ringständigen NH-Gruppe maximal ein weiteres Heteroatom im Zyklus auf, d.h. X hat bevorzugt die Formel (IIa)

$$X = -(CR^7R^8)_x-(Y)_o-(CR^{11}R^{12})_z- \qquad (IIa)$$

mit

- x und z = 0, 1, 2, 3, 4, 5, 6 oder 7,
- o = 0 oder1,

- $$2 \leq x + o + z \leq 15$$
- $R^7$, $R^8$, $R^{11}$, $R^{12}$ = H oder organischer Rest und
- Y = $NR^5$, $PR^5$, O oder S, wobei $R^5$ = organischer Rest.

Entsprechend gilt dann, dass in Formel (I) jeweils zwei organische Reste ausgewählt aus $R^1$ bis $R^8$, $R^{11}$ und $R^{12}$ auch einen oder mehrere weitere Ringe bilden können, mit der Maßgabe, dass mindestens einer der vorhandenen Reste ausgewählt aus $R^1$ bis $R^8$, $R^{11}$ und $R^{12}$ mit mindestens einer Gruppe $-NHR^6$ oder $-NH_2$ substituiert ist, wobei $R^6$ = organischer Rest.

Im bevorzugten Falle von x = 2 - 4 und o und z = 0 handelt es sich bei den resultierenden Verbindungen um gesättigte Heteroalkyl-Ringsysteme mit eine NH-Gruppe. Bevorzugte Verbindungen sind Pyrrolidine, Piperidine und Azepane. Im bevorzugten Falle von x = 1 - 3, o = 1 und z = 0 - 2 handelt es sich um gesättigte Heteroalkyl-Ringsysteme mit einer NH-Gruppe und einem weiteren Heteroatom im Zyklus, das nicht Teil einer weiteren cyclischen NH-Gruppe ist. Bevorzugte Verbindungen sind einfach N-substituierte Pyrazolidine, einfach N-substituierte Imidazolidine, Oxazolidine, Thiazolidine, einfach N-substituierte Piperazine, Morpholine, Thiomorpholine, einfach N-substituierte Diazepane, Oxazepane und Thiazepane. Bevorzugt ist in Formel (IIa) somit x = 1 - 4, o = 0 oder 1 und z = 0 - 2.

Es können jedoch auch Verbindungen mit drei Heteroatomen im Zyklus eingesetzt werden. Bevorzugt ist insbesondere die Gruppe der Triazinane und der Triazepane. Insbesondere diese Verbindungen können verbrückt vorliegen, wie z. B. bei der besonders bevorzugten Gruppe an Verbindungen der 1,3,6-Triazabicyclo[4.2.1]nonane.

Die Reste $R^1$, $R^2$, $R^3$, $R^4$, $R^5$, $R^6$, $R^7$, $R^8$, $R^9$, $R^{10}$, $R^{11}$ und $R^{12}$ können organische Reste sein. Bevorzugte organische Reste sind Alkyl-, Alkenyl-, Alkinyl-, Aryl- oder Aralkylreste. Diese können innerhalb ihrer Kette heteratomsubstituiert sein und/oder Substituenten tragen. Bevorzugte organische Reste sind Alkyl-, Alkenyl-, Alkinyl-, Aryl- oder Aralkylreste, die innerhalb der Kette eine oder mehrere Ether-, Carboxy-, Amino-, Amido-, Harnstoff-, Carbamat-, Carbonat-, Amidino- oder Guanidinogruppen tragen können. Weiterhin können bevorzugte organische Reste einen oder mehrere Substituenten ausgewählt aus organischen Resten, optional mit Ether-, Carboxy-, Amino-, Amido-, Harnstoff-, Carbamat-, Carbonat-, Amidino- oder Guanidinogruppen, die ggf. auch mit Hydroxy-, Nitril- oder Halogenresten substituiert sein oder selbst Hydroxy-, Nitril- oder Halogenreste sein können.

Bevorzugte Verbindungen der Formel (I) sind Aminoethylpiperazin (AEP, 1-(2-Aminoethyl)-piperazin), 1-(3-Aminopropyl)piperazin, 1-Imidazolidinethanamin, Imidazolidin-N-propanamin, $\alpha$-Methyl-1-piperazinethanamin, 2,6-Dimethyl-1-piperazinethanamin, 2-Amino-1-(piperazin-1-yl)-ethanon, 4-(2-Aminoethyl)piperidin, 3-(2-Aminoethyl)piperidin, und 2-(2-Aminoethyl)piperidin.

Die Verbindungen der Formel (I) können auch in Mischung eingesetzt werden.

Die erfindungsgemäßen Zusammensetzungen enthalten weiterhin mindestens ein **Salz einer sehr starken Brönstedt-Säure** mit einem Gegenion ausgewählt aus Metallionen, Metall-haltigen Ionen, Phosphoniumionen und unsubstituierten Ammoniumionen. Entsprechende Salze dienen als Katalysator. Unter einer solchen sehr starken Säure ist vorliegend eine Säure zu verstehen, deren pKs-Wert (bzw. im Falle mehrprotoniger Säuren deren pKs-Wert der ersten Protolysationsstufe) kleiner oder gleich -9,01 ist. Bevorzugt ist der pKs-Wert der sehr starken Säure zwischen -9,5 und - 25, besonders bevorzugt zwischen -9,9 und -21.

Der pKs ist definiert als der negative dekadische Logarithmus der Gleichgewichtskonstante Ks und gilt als Maß für die Stärke einer Säure. Je kleiner ein pKs-Wert, desto stärker die Säure. Der pKs-Wert wird bestimmt wie in F.G. Bordwell, "Equilibrium Acidities in Dimethylsulfoxide Solution", Acc. Chem. Res. 1988, 21, 456-463 offenbart.

Bevorzugte Salze sind die entsprechenden Salze der in der folgenden Tabelle 1 in der ersten Spalte zusammengefassten sehr starken Säuren:

Tabelle 1:

| Säure | pKs-Wert | Literaturstelle, falls nicht in Bordwell offenbart |
|---|---|---|
| Perchlorsäure | -10 | 1 |
| Trifluormethansulfonsäure | -14 | |
| Iodwasserstoff | -9,5 | 2 |
| Hexafluorophosphorsäure | -10 | 3 |

(fortgesetzt)

| Säure | pKs-Wert | Literaturstelle, falls nicht in Bordwell offenbart |
|---|---|---|
| Hexafluoroantimonsäure | -17 | 3 |
| 1) Hollemann Wiberg, Lehrbuch der anorganischen Chemie, 91.-100 Auflage, Walter der Gruyter Verlag, Berlin, New York, 1985, S. 428.<br>*2)* Journal of Physical Chemistry A, Volume 120, Issue 20, Pages 3663-3669.<br>3) http://www.periodensystem-online.de/index.php?sel=wertdesc&prop=pKs-Werte&show=list&id=acid | | |

Die Gegenionen dieser sehr starken Säuren sind ausgewählt aus Metallionen, Metall-haltigen Ionen, Phosphoniumionen und unsubstituierten Ammoniumionen. Bevorzugte Metallionen sind Erdalkalimetallkationen, insbesondere Beryllium-, Magnesium-, Calcium-, Strontium- und Barium-Ionen, sowie Lithium, Aluminium-, Bismut-, Zink- und Europiumionen.

Metall-haltige Ionen sind Ionen, die mindestens ein Metall enthalten, aber keine reinen Metallionen sind. Bevorzugt handelt es sich um Metallverbindungsionen, wie z. B. Tetraphenylstiboniumionen.

Auch können die Gegenionen Ammoniumionen ($NH_4^+$) oder ggf. alkylierte und/oder arylierte Phosphoniumionen sein. Ganz besonders bevorzugt sind Ammoniumionen.

Bevorzugte Salze sehr starker Säuren sind Calciumtriflat, Europiumtriflat, Bariumtriflat, Aluminiumtriflat, Bismuttriflat, Lithiumtriflat, Lithiumperchlorat, Bariumperchlorat, Lithiumhexafluorophosphat und Zinkperchlorat. Ganz besonders bevorzugt sind Calciumtriflat, Europiumtriflat, Lithiumhexafluorophosphat und Lithiumperchlorat.

Bevorzugt sind in organischen Medien (z. B. Benzylalkohol) gut lösliche Salze, d. h. Salze mit einer Löslichkeit von mindestens 10 g/l in Benzylalkohol bei 20 °C.

Bevorzugt können die erfindungsgemäßen Zusammensetzungen weiterhin d) nicht unter die Formel (I) fallende Amine und/oder e) weitere Hilfs- oder Zusatzstoffe aufweisen.

Nicht unter die Formel (I) fallende Amine d) sind bevorzugt Di- oder Polyamine. Diese können monomere, oligomere und/oder polymere Verbindungen sein. Bevorzugte monomere und oligomere Verbindungen sind ausgewählt aus der Gruppe bestehend aus Diaminen, Triaminen und Tetraminen. Die Amingruppe der Di- oder Polyamine d) kann an ein primäres, sekundäres oder tertiäres Kohlenstoffatom angebunden sein, bevorzugt an ein primäres oder sekundäres Kohlenstoffatom. Es können auch Mischungen von Di- und/oder Polyaminen als Komponente d) eingesetzt werden.

Als Komponente d) können bevorzugt die folgenden Amine allein oder in Mischungen eingesetzt werden:

- aliphatische Amine, insbesondere Polyalkylenpolyamine, bevorzugt ausgewählt aus 1,2-Ethylendiamin, 1,2-Propylendiamin, 1,3-Propylendiamin, 1,2-Butylendiamin, 1,3-Butylendiamin, 1,4-Butylendiamin, 2-(Ethylamino)ethylamin, 3-(Methylamino)propylamin, Diethylentriamin, Triethylentetramin, Pentaethylenhexamin, Trimethylhexamethylendiamin, 2,2,4-Trimethylhexamethylendiamin, 2,4,4-Trimethylhexamethylendiamin, 2-Methyl-pentandiamin, Hexamethylendiamin, N-(2-Aminoethyl)-1,2-ethandiamin, N-(3-Aminopropyl)-1,3-propandiamin, N,N"-1,2-Ethandiylbis-(1,3-propandiamin), Dipropylentriamin, Adipinsäuredihydrazid und Hydrazin;
- Oxyalkylenpolyamine, bevorzugt ausgewählt aus Polyoxypropylendiamin und Polyoxypropylentriamin (z. B. Jeffamine® D-230, Jeffamine® D-400, Jeffamine® T-403, Jeffamine® T-5000), 1,13-Diamino-4,7,10-trioxatridecan, 4,7-Dioxadecan-1,10-diamin;
- cycloaliphatische Amine, bevorzugt ausgewählt aus Isophorondiamin (3,5,5-Trimethyl-3-aminomethyl-cyclohexylamin), 4,4'-Diaminodicyclohexylmethan, 2,4'-Diaminodicyclohexylmethan und 2,2'-Diaminodicyclohexylmethan allein oder in Mischungen der Isomeren, 3,3'-Dimethyl-4,4'-diamino-dicyclohexylmethan, N-Cyclohexyl-1,3-propandiamin, 1,2-Diaminocyclohexan, 3-(Cyclohexylamino)propylamin, TCD-Diamin (3(4), 8(9)-Bis(aminomethyl)-tricyclo[5.2.1.02,6]decan), 4-Methylcyclohexan-1,3-diamin
- araliphatische Amine, bevorzugt Xylylendiamine;
- aromatische Amine, bevorzugt Phenylendiamine, insbesondere 1,3-Phenylendiamin und 1,4-Phenylendiamin, und 4,4'-Diaminodiphenylmethan, 2,4'-Diaminodiphenylmethan, 2,2'-Diaminodiphenylmethan, ggf. allein oder in Mischungen der Isomeren;
- Addukthärter, insbesondere Umsetzungsprodukte von Epoxidverbindungen, insbesondere Glycidylether des Bisphenol A und F, mit überschüssigem Amin;
- Polyamidoaminhärter, insbesondere durch Kondensation von Mono- und Polycarbonsäuren mit Polyaminen erhaltene Polyamidoaminhärter, ganz insbesondere durch Kondensation von Dimerfettsäuren mit Polyalkylenpolyaminen;
- Mannichbasenhärter, insbesondere durch Umsetzung von ein- oder mehrwertigen Phenolen mit Aldehyden, insbesondere Formaldehyd, und Polyaminen, Mannichbasenhärter; und

- Mannichbasen, insbesondere auf Basis von Phenol und/oder Resorcin, Formaldehyd und m-Xylylendiamin sowie N-Aminoethylpiperazin und Abmischungen von N-Aminoethylpiperazin mit Nonylphenol und/oder Benzylalkohol, Phenalkamine, die in einer Mannichreaktion aus Cardanolen, Aldehyden und Aminen gewonnen werden.

Es können auch Mischungen der vorab genannten Di- oder Polyamine als Komponente d) eingesetzt werden.

Bevorzugte weitere Hilfs- und Zuschlagsstoffe e) können die in der Epoxychemie üblichen Verbindungen sein. Bevorzugte Hilfs- und Zuschlagsstoffe e) sind Pigmente, Lösemittel, Verlaufsmittel, Modifikatoren, wie z. B. Benzylalkohol oder Nonylphenol, Entgasungsmittel, Mattierungsmittel, Reaktivverdünner, sowie herkömmliche Katalysatoren, wie Salizylsäure, Bisphenol A, 2,4,6-Tris(dimethylaminomethyl)phenol und Phenolderivate.

In einer bevorzugten Ausführungsform werden keine weiteren nicht unter die Formel (I) fallenden Amine d) eingesetzt. In einer bevorzugten Ausführungsform werden keine weiteren herkömmlichen Katalysatoren eingesetzt, d.h. die möglichen Hilfs- und Zuschlagsstoffe sind beschränkt auf Pigmente, Lösemittel, Verlaufsmittel, Modifikatoren, Entgasungsmittel, Mattierungsmittel und Reaktivverdünner.

Die Zusammensetzung der Komponenten a) bis e) in der erfindungsgemäßen Zusammensetzung beträgt bevorzugt die folgenden Gewichtsprozentanteile, bezogen auf die Gesamtmasse der Zusammensetzung:

a) Epoxyharz 30 - 95 %
b) cyclisches Amin 1 - 50 %
c) Salz der sehr starken Brönstedt-Säure 0,001 - 5 %,
bevorzugt 0,1 - 3 %,
d) weiteres Amin 0 - 48 % und
e) weitere Hilfs- oder Zusatzstoffe 0 - 48 %.

Bevorzugt beträgt weiterhin der Gewichtsprozentanteil der Amine b) bezogen auf die Gesamtmasse der Amine b) und d) mindestens 10 Gew.-%, besonders bevorzugt mindestens 30 %, ganz besonders bevorzugt mindestens 50 % und noch bevorzugter mindestens 70%.

Gegenstand der Erfindung ist weiterhin ein Verfahren zur Herstellung einer erfindungsgemäßen Zusammensetzung, bei dem mindestens ein Epoxyharz a), mindestens ein cyclisches Amin b) und mindestens ein Salz einer sehr starken Säure c) miteinander vermischt wird.

Gegenstand der Erfindung ist weiterhin die Verwendung der erfindungsgemäßen Zusammensetzungen als Gießharz, Beschichtungsmasse, Komposit oder Klebstoff oder als Bestandteil davon.

**Experimenteller Teil:**

Beispiel 1)

Zum Nachweis der besonderen Reaktivität der beanspruchten Katalysatoren werden zunächst Modellversuche miteinander verglichen. Dazu gibt man jeweils 0,025 Mol (3,75 g) des 1,2-Epoxy-3-phenoxypropans in eine Mischung aus 22,68 g Toluol (Lösemittel) und 2,08 g Tetradecan (interner Standard). Dazu werden 0,025 Mol (2,13 g) Piperidin zugegeben und 0,06 g des jeweiligen Katalysators. Sofort nach der Mischung wird ein GC angefertigt und der Gehalt an 1,2-Epoxy-3-phenoxypropan mit dem Gehalt des Tetradecans verglichen. Nach 4 h bei Raumtemperatur wird mittels einer GC-Untersuchung der Restgehalt an 1,2-Epoxy-3-phenoxypropan (EP) ermittelt (kalibriert durch den internen Standard Tetradecan). Dabei ergeben sich folgende Resultate:

**Vergleich der Katalysatoren**

| | Katalysator | % EP in der 0-Probe | % EP nach 4 Stunden bei RT |
|---|---|---|---|
| 1* | Kein Katalysator | 97 | 93 |
| 2* | Dibutylzinndilaurat | 99 | 93 |
| 3* | Diazabicyclononan (DBN) | 97 | 95 |
| 4* | Diazabicycloundecan (DBU) | 96 | 93 |
| 5* | Diazabicyclooctan (DABCO) | 94 | 93 |

(fortgesetzt)

| | Katalysator | % EP in der 0-Probe | % EP nach 4 Stunden bei RT |
|---|---|---|---|
| 6* | Zinkacetylacetonat | 94 | 90 |
| 7* | Tetrabutylammoniumtribromid | 91 | 87 |
| 8* | Bismuthneodecanoat | 91 | 88 |
| 9* | Titantetrabutylat | 95 | 94 |
| 10* | Salicylsäure | 93 | 90 |
| 11* | Phenol | 97 | 85 |
| 12 | Kalziumtriflat | 90 | 0 |
| 13 | Bismuthtriflat | 90 | 57 |
| 14 | Natriumtriflat | 96 | 52 |
| 15 | Europiumtriflat | 85 | 16 |
| 16 | Bariumtriflat | 96 | 37 |
| 17 | Aluminiumtriflat | 98 | 53 |
| 18 | Lithiumtriflat | 90 | 28 |
| 19 | Lithiumperchlorat | 73 | 9 |
| 20 | Bariumperchlorat | 85 | 26 |
| 21 | Zinkperchlorat | 96 | 46 |
| 22 | Ammoniumhexafluorophosphat | 86 | 43 |
| 23 | Kalziumperchlorat | 98 | 49 |
| 24 | Samariumiodid | 98 | 37 |
| 25 | Kaliumhexafluorophosphat | 97 | 36 |
| 26 | Lithiumhexafluorophosphat | 78 | 9 |
| 27 | Zinktriflat | 98 | 44 |
| 28 | Kupfertriflat | 93 | 48 |
| 29 | Samariumtriflat | 84 | 32 |
| 30 | Magnesiumtriflat | 94 | 41 |
| 31 | Indiumtriflat | 89 | 39 |
| 32 | Nickeltriflat | 100 | 56 |
| 33 | Eisentriflat | 93 | 39 |
| 34 | Mangantriflat | 93 | 44 |
| 35 | Zinntriflat | 96 | 42 |
| 36 | Terbiumtriflat | 90 | 41 |
| 37 | Cadmiumperchlorat | 98 | 64 |
| 38 | Eisenperchlorat | 97 | 52 |
| 39 | Manganperchlorat | 98 | 59 |
| 40 | Indiumperchlorat | 99 | 59 |
| * Nicht erfindungsgemäße Vergleichsversuche | | | |

Beispiel 2)

Zum Nachweis der besonderen Reaktivität der beanspruchten Amine werden zunächst Modellversuche miteinander verglichen. Dazu gibt man jeweils 0,025 Mol (3,75 g) des 1,2-Epoxy-3-phenoxypropans in eine Mischung aus 22,68 g Toluol (Lösemittel) und 2,08 g Tetradecan (interner Standard). Dazu werden 0,025 NH-Äquivalente eines Amins hinzugegeben und 0,06 g Kalziumtriflat. Sofort nach der Mischung wird ein GC angefertigt und der Gehalt an 1,2-Epoxy-3-phenoxypropan mit dem Gehalt des Tetradecans verglichen. Nach 4 h bei Raumtemperatur wird mittels einer GC-Untersuchung der Restgehalt an 1,2-Epoxy-3-phenoxypropan (EP) ermittelt (kalibriert durch den internen Standard Tetradecan). Dabei ergeben sich folgende Resultate:

| | **Amin** | **% EP in der 0-Probe** | **% EP nach 4 Stunden bei RT** | **% EP nach 4 Stunden bei 5 °C** |
|---|---|---|---|---|
| 1* | Butylamin | 92 | 52 | 73 |
| 2* | Methylpropylamin | 92 | 46 | 91 |
| 3* | Ethanolamin | 91 | 63 | 80 |
| 4 | Piperidin | 93 | 0 | 32 |
| * Nicht erfindungsgemäße Vergleichsversuche | | | | |

Aus den Modellversuchen geht eindeutig hervor, dass die beanspruchten Zusammensetzungen wesentlich reaktiver sind als herkömmliche Systeme.

Vergleichsbeispiel 3a)

100 Teile Aminoethylpiperazin (AEP, Aldrich) werden mit 446 Teilen Epikote 828 (Epoxyäquivalent 190, Hexion) innigst vermischt und sofort danach ein DSC angefertigt.

Vergleichsbeispiel 3b)

In 100 Teile Aminoethylpiperazin (AEP, Aldrich) werden 0,5 Teile Kalziumtriflat (Aldrich) gelöst und diese Mischung wird innigst mit 446 Teilen Epikote 828 (Epoxyäquivalent 190, Hexion) vermischt und sofort danach ein DSC angefertigt.

| **Rezeptur-Nr.** | | **3a*** | **3b** |
|---|---|---|---|
| ***DSC-Analyse sofort*** | | | |
| Exothermer Peak | °C | 97 | 74 |
| **Onset** | °C | **61** | **32** |
| Exothermer Wärmestrom | J/g | 500 | 456 |
| **Tg max.** | °C | 121 | 122 |
| * Nicht erfindungsgemäße Vergleichsversuche | | | |

Bei dem erfindungsgemäßen Versuch liegt sowohl der exotherme Peak um 23 °C niedriger, als auch der Onset dieses exothermen Peaks um 29 °C. Die erfindungsgemäße reaktive Zusammensetzung ist also wesentlich reaktiver.

## Patentansprüche

**1.** Zusammensetzung umfassend

a) mindestens ein Epoxyharz,
b) mindestens ein cyclisches Amin der Formel (I) in der

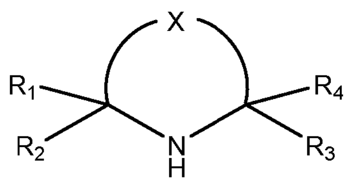

(I)

- $R^1$ bis $R^4$ für H oder organischen Rest steht und
-

$$X = -(Y^1)_m-(A^1)_n-(Y^2)_o-(A^2)_p-(Y^3)_q-(A^3)_r-(Y^4)_s- , \quad (II)$$

wobei unabhängig von einander
- m, n, o, p, q, r und s = 0 oder 1,
- $A^1$, $A^2$, $A^3$ = Alkylen- oder Alkenylenrest und
- $Y^1$, $Y^2$, $Y^3$, $Y^4$ = $NR^5$, $PR^5$, O oder S, wobei $R^5$ unabhängig voneinander = organischer Rest,
- wobei jeweils zwei organische Reste ausgewählt aus $R^1$ bis $R^5$ und ggf. anwesenden Resten der Alkylen- und/oder Alkenylenreste $A^1$, $A^2$, $A^3$ auch einen oder mehrere weitere Ringe bilden können,
- mit der Maßgabe, dass mindestens einer der vorhandenen Reste ausgewählt aus $R^1$ bis $R^5$ und ggf. anwesenden Resten der Alkylen- und/oder Alkenylenreste $A^1$, $A^2$, $A^3$ mit mindestens einer Gruppe $-NHR^6$ oder $-NH_2$ substituiert ist, wobei $R^6$ = organischer Rest, und

c) mindestens ein Salz einer Brönstedt-Säure mit einem pKs-Wert kleiner oder gleich -9,01 mit einem Gegenion ausgewählt aus Metallionen, Metall-haltigen Ionen, Phosphoniumionen und unsubstituierten Ammoniumionen.

**2.** Zusammensetzung nach Anspruch 1,
**dadurch gekennzeichnet, dass**
das Verhältnis der Epoxy-Gruppen des Epoxyharzes zu der Summe aller NH-Gruppen aller Amine 0,5 : 1 bis 1,5 : 1 beträgt.

**3.** Zusammensetzung nach Anspruch 1 oder 2,
**dadurch gekennzeichnet, dass**
das mindestens eine Epoxyharz ein Polyepoxid auf Basis von Bisphenol A-diglycidylether, Bisphenol F-diglycidylether, 4,4'-Methylen-bis[N,N-bis(2,3-epoxypropyl)anilin], Hexandioldiglycidylether, Butandioldiglycidylether, Trimethylolpropantriglycidylether, 1,2,3-Propantrioltriglycidylether, Pentaerythrit-tetraglycidylether und Hexahydrophthalsäurediglycidylester ist.

**4.** Zusammensetzung nach einem der vorhergehenden Ansprüche,
**dadurch gekennzeichnet, dass**
in Formel (I) mindestens einer der Reste $R^1$, $R^2$, $R^3$ und $R^4$ = H sind.

**5.** Zusammensetzung nach einem der vorhergehenden Ansprüche,
**dadurch gekennzeichnet, dass**
$A^1$, $A^2$ und $A^3$ unabhängig voneinander die Formel (III) aufweisen

$$-(CR^7R^8)_x-(CR^9=CR^{10})_y-(CR^{11}R^{12})_z- \quad (III)$$

in der unabhängig von einander

- $R^7$, $R^8$, $R^9$, $R^{10}$, $R^{11}$ und $R^{12}$ = H oder organischer Rest und
-

$$1 \leq x + y + z \leq 7$$

ist.

6. Zusammensetzung nach einem der vorhergehenden Ansprüche, **dadurch gekennzeichnet, dass** X in Formel (II) eine Kettenlänge von 2 bis 15 Atomen aufweist.

7. Zusammensetzung nach einem der vorhergehenden Ansprüche, **dadurch gekennzeichnet, dass** X die Formel (IIa)

$$X = -(CR^7R^8)_x-(Y)_o-(CR^{11}R^{12})_z- \qquad \text{(IIa)}$$

mit

- x und z = 0, 1, 2, 3, 4, 5, 6 oder 7,
- o = 0 oder1,
-

$$2 \leq x + o + z \leq 15$$

- $R^7$, $R^8$, $R^{11}$, $R^{12}$ = H oder organischer Rest und
- Y = $NR^5$, $PR^5$, O oder S, wobei $R^5$ = organischer Rest,

hat.

8. Zusammensetzung nach Anspruch 7, **dadurch gekennzeichnet, dass** x = 1, 2, 3 oder 4, o = 0 oder 1 und z = 0, 1 oder 2.

9. Zusammensetzung nach einem der Ansprüche 1 - 6, **dadurch gekennzeichnet, dass** das cyclische Amin der Formel (I) ein Triazinan oder Triazepan ist.

10. Zusammensetzung nach einem der vorhergehenden Ansprüche, **dadurch gekennzeichnet, dass** das mindestens eine cyclische Amin der Formel (I) ausgewählt ist aus der Gruppe bestehend aus 1-(2-Aminoethyl)piperazin, 1-(3-Aminopropyl)piperazin, 1-Imidazolidinethanamin, Imidazolidin-N-propanamin, $\alpha$-Methyl-1-piperazinethanamin, 2,6-Dimethyl-1-piperazinethanamin, 2-Amino-1-(piperazin-1-yl)ethanon, 4-(2-Aminoethyl)piperidin, 3-(2-Aminoethyl)piperidin und 2-(2-Aminoethyl)piperidin.

11. Zusammensetzung nach einem der vorhergehenden Ansprüche, **dadurch gekennzeichnet, dass** das Salz einer sehr starken Säure ein Erdalkalimetall-, Lithium-, Aluminium-, Bismut-, Zink-, Europium-, Tetraphenylstibonium-, Phosphonium- oder unsubstituiertes Ammoniumsalz ist.

12. Zusammensetzung nach einem der vorhergehenden Ansprüche, **dadurch gekennzeichnet, dass** sie weiterhin

d) nicht unter die Formel (I) fallende Amine und/oder
e) weitere Hilfs- oder Zusatzstoffe aufweist.

13. Zusammensetzung nach Anspruch 12, **dadurch gekennzeichnet, dass** die nicht unter die Formel (I) fallenden Amine d) ausgewählt sind aus

- aliphatischen Aminen,
- Oxyalkylenpolyaminen
- Cycloaliphatischen Aminen,
- Araliphatischen Aminen,
- Aromatischen Aminen

- Addukthärtern,
- Polyamidoaminhärtern
- Mannichbasenhärtern und
- Mannichbasen.

**14.** Zusammensetzung nach einem der Ansprüche 12 oder 13,
**dadurch gekennzeichnet, dass**
die Zusammensetzung die Komponenten a) bis e) in den folgenden Gewichtsprozentanteilen, bezogen auf die Gesamtmasse der Zusammensetzung aufweist:

a) Epoxyharz 30 - 95 %
b) cyclisches Amin 1 - 50 %
c) Salz der sehr starken Brönstedt-Säure 0,001 - 5 %
d) weiteres Amin 0 - 48 % und
e) weitere Hilfs- oder Zusatzstoffe 0 - 48 %.

**15.** Zusammensetzung nach einem der Ansprüche 12 - 14,
**dadurch gekennzeichnet, dass**
der Gewichtsprozentanteil der Amine b) bezogen auf die Gesamtmasse der Amine b) und d) mindestens 10 Gew.-% beträgt,

**16.** Verfahren zur Herstellung einer Zusammensetzung nach einem der der vorhergehenden Ansprüche 1 - 15, **dadurch gekennzeichnet, dass** mindestens ein Epoxyharz a), mindestens ein cyclisches Amin b) und mindestens ein Salz einer sehr starken Brönstedt-Säure c) miteinander vermischt werden.

**17.** Verwendung einer Zusammensetzung nach einem der Ansprüche 1 -15 als Gießharz, Beschichtungsmasse, Komposit oder Klebstoff oder als Bestandteil davon.

## Claims

**1.** Composition comprising

a) at least one epoxy resin,
b) at least one cyclic amine of the formula (I)

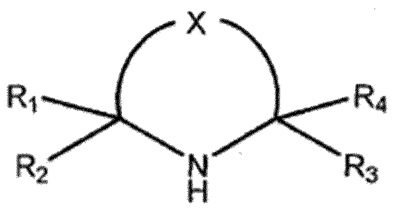

(I)

in which

- $R^1$ to $R^4$ is H or an organic radical and
-

$$X = -(Y^1)_m-(A^1)_n-(Y^2)_o-(A^2)_p-(Y^3)_q-(A^3)_r-(Y^4)_s- \qquad (II)$$

where, independently of one another,
- m, n, o, p, q, r and s = 0 or 1,
- $A^1$, $A^2$, $A^3$ = alkylene or alkenylene radical and
- $Y^1$, $Y^2$, $Y^3$, $Y^4$ = $NR^5$, $PR^5$, 0 or S, where $R^5$ independently = organic radical,
- where any two organic radicals selected from $R^1$ to $R^5$ and any radicals present in the alkylene and/or

alkenylene radicals $A^1$, $A^2$, $A^3$ may also form one or more further rings,
- with the proviso that at least one of the radicals selected from $R^1$ to $R^5$ present and any radicals present in the alkylene and/or alkenylene radicals $A^1$, $A^2$, $A^3$ is substituted by at least one $-NHR^6$ or $-NH_2$ group, where $R^6$ = organic radical, and

c) at least one salt of a Bronsted acid having a pKa of no lower than -9.01 with a counterion selected from metal ions, metal-containing ions, phosphonium ions and unsubstituted ammonium ions.

2. Composition according to Claim 1,
**characterized in that**
the ratio of the epoxy groups in the epoxy resin to the sum total of all NH groups in all amines is 0.5:1 to 1.5:1,

3. Composition according to Claim 1 or 2,
**characterized in that**
the at least one epoxy resin is a polyepoxide based on bisphenol A diglycidyl ether, bisphenol F diglycidyl ether, 4,4'-methylenebis[N,N-bis(2,3-epoxypropyl)aniline], hexanediol diglycidyl ether, butanediol diglycidyl ether, trimethylolpropane triglycidyl ether, propane-1,2,3-triol triglycidyl ether, pentaerythritol tetraglycidyl ether and diglycidyl hexahydrophthalate.

4. Composition according to any of the preceding claims,
**characterized in that**
at least one of the $R^1$, $R^2$, $R^3$ and $R^4$ radicals in formula (I) = H.

5. Composition according to any of the preceding claims,
**characterized in that**
$A^1$, $A^2$ and $A^3$ independently have the formula (III)

$$-(CR^7R^8)_x-(CR^9=CR^{10})_y-(CR^{11}R^{12})_z- \qquad \text{(III)}$$

in which, independently of one another,

- $R^7$, $R^8$, $R^9$, $R^{10}$, $R^{11}$ and $R^{12}$ = H or organic radical and
-

$$1 \leq x + y + z \leq 7.$$

6. Composition according to any of the preceding claims,
**characterized in that**
X in formula (II) has a chain length of 2 to 15 atoms.

7. Composition according to any of the preceding claims,
**characterized in that**
X has the formula (IIa)

$$X = -(CR^7R^8)_x-(Y)_o-(CR^{11}R^{12})_z- \qquad \text{(IIa)}$$

with

- x and z = 0, 1, 2, 3, 4, 5, 6 or 7,
- o = 0 or 1,
-

$$2 \leq x + o + z \leq 15$$

- $R^7$, $R^8$, $R^{11}$, $R^{12}$ = H or organic radical and
- Y = $NR^5$, $PR^5$, 0 or S, where $R^5$ = organic radical.

**8.** Composition according to Claim 7,
**characterized in that**
x = 1, 2, 3 or 4, o = 0 or 1 and z = 0, 1 or 2.

**9.** Composition according to any of Claims 1-6,
**characterized in that**
the cyclic amine of the formula (I) is a triazinane or triazepane.

**10.** Composition according to any of the preceding claims,
**characterized in that**
the at least one cyclic amine of the formula (I) is selected from the group consisting of 1-(2-aminoethyl)piperazine, 1-(3-aminopropyl)piperazine, 1-imidazolidinoethanamine, imidazolidino-N-propanamine, α-methyl-1-piperazinethanamine, 2,6-dimethyl-1-piperazinoethanamine, 2-amino-1-(piperazin-1-yl)ethanone, 4-(2-aminoethyl)-piperidine, 3-(2-aminoethyl)piperidine and 2-(2-aminoethyl)piperidine.

**11.** Composition according to any of the preceding claims,
**characterized in that**
the salt of a very strong acid is an alkaline earth metal salt, lithium salt, aluminium salt, bismuth salt, zinc salt, europium salt, tetraphenylstibonium salt, phosphonium salt or unsubstituted ammonium salt.

**12.** Composition according to any of the preceding claims,
**characterized in that** it also includes

d) amines not covered by the formula (I) and/or
e) further auxiliaries or additives.

**13.** Composition according to Claim 12,
**characterized in that**
the amines d) not covered by the formula (I) are selected from

- aliphatic amines,
- oxyalkylenepolyamines
- cycloaliphatic amines,
- araliphatic amines,
- aromatic amines
- adduct hardeners,
- polyamidoamine hardeners
- Mannich base hardeners and
- Mannich bases.

**14.** The composition as claimed in either of claims 12 and 13,
**characterized in that**
the composition includes components a) to e) in the following percentages by weight, based on the total mass of the composition:

a)epoxy resin 30-95%
b) cyclic amine 1-50%
c) salt of the very strong Bronsted acid 0.001-5%
d) further amine 0-48% and
e) further auxiliaries or additives 0-48%.

**15.** Composition according to any of Claims 12-14,
**characterized in that**
the percentage by weight of the amines b) based on the total mass of the amines b) and d) is at least 10% by weight.

**16.** Process for producing a composition according to any of the preceding Claims 1-15, **characterized in that** at least one epoxy resin a), at least one cyclic amine b) and at least one salt of a very strong Bronsted acid c) are mixed with one another.

**17.** Use of a composition according to at least one of Claims 1-15 as casting resin, coating composition, composite or adhesive or as a constituent thereof.

## Revendications

**1.** Composition comprenant

a) au moins une résine époxy,
b) au moins une amine cyclique de formule (I)

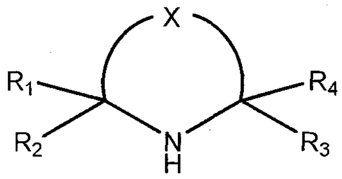

(I)

dans laquelle

- $R^1$ à $R^4$ représentent H ou un radical organique et
-

$$X = -(Y^1)_m-(A^1)_n-(Y^2)_o-(A^2)_p-(Y^3)_q-(A^3)_r-(Y^4)_s-, \qquad (II)$$

dans laquelle, indépendamment les uns des autres
- m, n, o, p, q, r et s = 0 ou 1,
- $A^1$, $A^2$, $A^3$ = radical alkylène ou alcénylène et
- $Y^1$, $Y^2$, $Y^3$, $Y^4$ = $NR^5$, $PR^5$, O ou S, où $R^5$, indépendamment, = radical organique,
- où à chaque fois deux radicaux organiques, choisis parmi $R^1$ à $R^5$ et le cas échéant les radicaux présents des radicaux alkylène et/ou alcénylène $A^1$, $A^2$, $A^3$, peuvent également former un ou plusieurs autres cycles,
- sous réserve qu'au moins un des radicaux présents, choisi parmi $R^1$ à $R^5$ et le cas échéant les radicaux présents des radicaux alkylène et/ou alcénylène $A^1$, $A^2$, $A^3$, est substitué par au moins un groupe $-NHR^6$ ou $-NH_2$, $R^6$ = radical organique, et

c) au moins un sel d'un acide de Brönstedt présentant une valeur $pK_a$ inférieure ou égale à -9,01 avec un contre-ion choisi parmi les ions métalliques, les ions contenant un métal, les ions de phosphonium et les ions d'ammonium non substitués.

**2.** Composition selon la revendication 1, **caractérisée en ce que** le rapport des groupes époxy de la résine époxy à la somme de tous les groupes NH de toutes les amines vaut 0,5:1 à 1,5:1.

**3.** Composition selon la revendication 1 ou 2, **caractérisée en ce que** ladite au moins une résine époxy est un polyépoxyde à base de bisphénol-A-diglycidyléther, bisphénol-F-diglycidyléther, 4,4'-méthylène-bis-[N,N-bis(2,3-époxypropyl)aniline], hexanedioldiglycidyléther, butanedioldiglycidyléther, triméthylolpropanetriglycidyléther, 1,2,3-propanetrioltriglycidyléther, pentaérythritoltétraglycidyléther et diglycidyléther de l'acide hexahydrophtalique.

**4.** Composition selon l'une quelconque des revendications précédentes, **caractérisée en ce que**, dans la formule (I), au moins l'un des radicaux $R^1$, $R^2$, $R^3$ et $R^4$ = H.

**5.** Composition selon l'une quelconque des revendications précédentes, **caractérisée en ce que** $A^1$, $A^2$ et $A^3$ présentent, indépendamment les uns des autres, la formule (III)

$$-(CR^7R^8)_x-(CR^9=CR^{10})_y-(CR^{11}R^{12})_z- \qquad (III)$$

dans laquelle, indépendamment les uns des autres

- $R^7$, $R^8$, $R^9$, $R^{10}$, $R^{11}$ et $R^{12}$ = H ou radical organique et
-

$$1 \leq x + y + z \leq 7.$$

**6.** Composition selon l'une quelconque des revendications précédentes, **caractérisée en ce que** X dans la formule (II) présente une longueur de chaîne de 2 à 15 atomes.

**7.** Composition selon l'une quelconque des revendications précédentes, **caractérisée en ce que** X présente la formule (IIa)

$$X = -(CR^7R^8)_x-(Y)_o-(C^{11}R^{12})_z- \qquad \text{(IIa)}$$

dans laquelle

- x et z = 0, 1, 2, 3, 4, 5, 6 ou 7,
- o = 0 ou 1,
-

$$2 \leq x + o + z \leq 15$$

- $R^7$, $R^8$, $R^{11}$, $R^{12}$ = H ou radical organique et
- Y = $NR^5$, $PR^5$, 0 ou S, où $R^5$ = radical organique.

**8.** Composition selon la revendication 7, **caractérisée en ce que** x = 1, 2, 3 ou 4, o = 0 ou 1 et z = 0, 1 ou 2.

**9.** Composition selon l'une quelconque des revendications 1-6, **caractérisée en ce que** l'amine cyclique de formule (I) est un triazinane ou un triazépane.

**10.** Composition selon l'une quelconque des revendications précédentes, **caractérisée en ce que** ladite au moins une amine cyclique de formule (I) est choisie dans le groupe constitué par la 1-(2-aminoéthyl)pipérazine, la 1-(3-aminopropyl)pipérazine, la 1-imidazolidinéthanamine, l'imidazolidine-N-propanamine, l'a-méthyl-1-pipérazinéthanamine, la 2,6-diméthyl-1-pipérazinéthanamine, la 2-amino-1-(pipérazin-1-yl)éthanone, la 4-(2-aminoéthyl)pipéridine, la 3-(2-aminoéthyl)pipéridine et la 2-(2-aminoéthyl)pipéridine.

**11.** Composition selon l'une quelconque des revendications précédentes, **caractérisée en ce que** le sel d'un acide très fort est un sel de métal alcalino-terreux, de lithium, d'aluminium, de bismuth, de zinc, d'europium, de tétraphénylstibonium, de phosphonium ou un sel d'ammonium non substitué.

**12.** Composition selon l'une quelconque des revendications précédentes, **caractérisée en ce qu'**elle présente en outre

d) des amines ne relevant pas de la formule (I) et/ou
e) d'autres adjuvants ou additifs.

**13.** Composition selon la revendication 12, **caractérisée en ce que** les amines ne relevant pas de la formule (I) d) sont choisies parmi

- les amines aliphatiques,
- les oxyalkylènepolyamines,
- les amines cycloaliphatiques,
- les amines araliphatiques,
- les amines aromatiques,
- les durcisseurs de type produit d'addition,
- les durcisseurs de type polyamidoamine,
- les durcisseurs de type base de Mannich et
- les bases de Mannich.

**14.** Composition selon l'une quelconque des revendications 12 ou 13, **caractérisée en ce que** la composition présente les composants a) à e) aux proportions en % en poids suivantes, par rapport à la masse totale de la composition :

a) résine époxy 30-95%
b) amine cyclique 1-50%
c) sel de l'acide de Brönstedt très fort 0,001-5%
d) autre amine 0-48% et
e) autres adjuvants ou additifs 0-48%.

**15.** Composition selon l'une quelconque des revendications 12-14, **caractérisée en ce que** la proportion en % en poids des amines b) par rapport à la masse totale des amines b) et d) est d'au moins 10% en poids.

**16.** Procédé pour la préparation d'une composition selon l'une quelconque des revendications précédentes 1-15, **caractérisé en ce qu'**au moins une résine époxy a), au moins une amine cyclique b) et au moins un sel d'un acide de Brönstedt très fort c) sont mélangés les uns avec les autres.

**17.** Utilisation d'une composition selon l'une quelconque des revendications 1-15 en tant que résine de coulée, masse de revêtement, composite ou adhésif ou en tant que constituant de ceux-ci.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3492269 A
- US 5470896 A
- GB 1105772 A
- EP 0083813 A1
- EP 2957584 A1
- US 5441000 A
- US 5629380 A
- WO 9609352 A1
- US 8951619 B2
- US 9006385 B2
- CN 106905816 A
- CN 106833261 A
- JP H08113876 A
- DE 1954701 A1
- CA 2165585 A1
- US 3055901 A
- US 8980979 B2
- EP 0969030 A1
- US 4775734 A
- EP 3255078 A1
- WO 2017074810 A1
- EP 675185 A2


### In der Beschreibung aufgeführte Nicht-Patentliteratur


- Epoxidverbindungen und Epoxidharze. **A. M. PAQUIN.** Epoxyverbindungen findet sich in dem Handbuch. Springer Verlag, 1958
- **LEE NEVILLE.** Handbook of Epoxy Resins. 1967
- **F.G. BORDWELL.** Equilibrium Acidities in Dimethylsulfoxide Solution. *Acc. Chem. Res.,* 1988, vol. 21, 456-463
- **HOLLEMANN WIBERG.** Lehrbuch der anorganischen Chemie. Walter der Gruyter Verlag, 1985, vol. 91, 428
- *Journal of Physical Chemistry A,* vol. 120 (20), 3663-3669